# EUROPEAN PATENT APPLICATION

(11) **EP 2 479 913 A1**
(43) Date of publication of application: **25.07.2012**
(21) Application number: 11290036.0
(22) Date of filing: 21.01.2011
(51) Int. Cl.: H04L 1/00

(54) **Methods and apparatus for simultaneous transmission and reception of a data sequence and channel information for link adaptation**

(71) Applicant: Alcatel Lucent, 75007 Paris (FR)
(72) Inventor: Santos, André F.d., 70197 Stuttgart (DE); Wild, Thorsten, 70435 Stuttgart (DE); Stefan, Valentin, 70378 Stuttgart (DE)
(74) Representative: Schäfer, Wolfgang

(57) **Abstract**

The present invention refers to methods and apparatus for simultaneous transmission and reception of a data sequence (d) and channel information (CI) for link adaptation. In order to provide a method, a transmitter element (34), and a receiver element (38) that consume less transmission resources and improve the overall spectral efficiency of the network, a method and a transmitter element (34) for simultaneous transmission of a data sequence (d) and channel information (CI) for link adaptation over a radio channel (29) of a wireless network (11) is suggested, the method comprising encoding said data sequence to a codeword (c) using a channel encoder (19) and transmitting (21) the codeword (c) over the radio channel (29), wherein the method further comprises including the channel information (CI) into the codeword (c) using said channel encoder (19), the codeword (c) comprising both the data sequence (d) and the channel information (CI). Furthermore, a corresponding method and receiver element (38) for receiving and decoding the transmitted codeword (c) are suggested.

## Description

### Specification

### Field of the invention

The present invention refers to a method and a transmitter element for simultaneous transmission of a data sequence and channel information for link adaptation over a radio channel of a wireless network as well as a method and a receiver element for simultaneous reception of a data sequence and channel information for link adaptation from a radio channel of a wireless network.

### Background

Known cellular communication networks use link adaptation in order to adapt transmissions in downlink direction from a base station of the network to a terminal registered with the base station. To this end, the terminal acquires channel information related to the radio channel and communicates this channel information to the base station. The base station adapts the transmission in downlink direction depending on the channel information received from the terminal.

Communicating the channel information to the base station consumes transmission resources of the radio channel and therefore reduces the overall spectral efficiency of the cellular communication network. In particular if a state of the channel is varying quickly, the terminal must update the channel information stored in the base station frequently. In multiuser MIMO and MIMO-OFDMA systems, the overhead caused by communication channel information to the base station may become unacceptable if the number of users and/or antennas within a radio cell of the network increases.

Known cellular communication networks use source coding of the channel information, e.g. reducing redundancy of the channel information, in order to keep the overhead caused by communicating the channel information to the base station small.

### Summary

The object of the present invention is to provide a method, a transmitter element, and a receiver element for simultaneous transmitting and/or receiving a data sequence and channel information for link adaptation that consume less transmission resources and improve the overall spectral efficiency of the network.

According to a preferred embodiment, a method for simultaneous transmission of a data sequence and channel information for link adaptation over a radio channel of a wireless network is provided, the method comprising encoding said data sequence to a codeword using a channel encoder, transmitting the codeword over the radio channel, and including the channel information into the codeword using said channel encoder, the codeword comprising both the data sequence and the channel information. In other words, a single channel encoder is used for encoding both the data sequence and the channel information. Thus the data sequence and the channel information are included in a single codeword. Including the channel information into the codeword may comprise embedding the channel information in an non-redundant manner, into the codeword using said channel encoder. Embedding the channel information into the codeword, but transmitting only the bits regarding data information, reduces overhead caused by the transmission of the channel information and therefore improves the efficiency of the wireless network. Furthermore, the interpretation of the channel information by the receiver is possible due to the correlation between data and channel information bits, which is constructed during the encoding process. The method allows for efficiently transferring the channel information between different network elements of the network like terminals and base stations. When applying this method, efficient link adaptation is possible even if frequent updates of the channel information, e.g. transmissions of the channel information from a terminal of the network to a base station of the network, are required.

The method can be applied in connection with any type of wireless networks. For example, the wireless network may be a cellular network such as the Universal Mobile Telecommunication System (UMTS), the Long Term Evolution (LTE) system, the LTE-Advanced system, or the Worldwide Interoperability for Microwave Access (WiMAX) system.

The channel information describes momentary characteristics of the channel. In LTE, the channel information is also referred to as Channel State Information (CSI). The channel information may comprise a Channel Quality Indicator (CQI). In LTE, the terminal estimates the quality of the channel, determines the CQI depending on the estimated quality, and transmits the CQI to the base station. Furthermore, the channel information may comprise a Precoding Matrix Indicator (PMI). The terminal may communicate the PMI to the base station. The base station may determine precoding weights or a precoding matrix depending on the PMI received from the terminal and adapt downlink data transmissions to that terminal according to the precoding weights.

The data sequence may comprise payload data of higher layers and/or further control data used to control the data transmission.

Usually, the codeword may consist of code bits depending either on the data sequence or on both the data sequence and the channel information. That is, the codeword does not have code bits that correspond merely to the channel information. That is, the channel information is not transmitted explicitly by including special bits for the channel information into the codeword. Encoding the channel information without using dedicated code bits for the channel information allows for extending existing channel codes by exploiting their redundancy. It is not required to insert additional bits to the codeword. As a consequence, inserting the channel information slightly reduces the error correction capability of the channel code. However, in many embodiments, the data sequence has much more data bits than the channel information. Thus, a resulting marginal degradation on the error detection rate of a code used to generate the codeword will be acceptable.

In an embodiment, the channel encoder is a systematic encoder, preferably a systematic convolutional encoder and said encoding comprises generating the codeword by systematically encoding the data sequence and the channel information.

Preferably, said encoding comprises puncturing at least one bit of the generated codeword that corresponds to a bit of the channel information. In an embodiment, said encoding comprises puncturing all bits of the generated codeword that correspond to a bit of the channel information. By puncturing, the code bits corresponding to the channel information are removed from the codeword. As a result, inserting the channel information does not add bits to the codeword. The channel information can still be regenerated by a receiver that receives the punctured codeword by exploiting the redundancy of the code.

Instead of puncturing the codeword, in some embodiments said encoding may comprise generating a first intermediate codeword depending on the data sequence using a first code and generating a second intermediate codeword depending on the channel information using a second code, each codeword of the second code being different from any codeword of the first code. In other words, codewords that are not used by the first code, i.e. that do not belong to the first code, are used for encoding the channel information.

Preferably, said encoding comprises generating the codeword by adding the first intermediate codeword and the second intermediate codeword according to modulo2-arithmetic. Modulo-2-arithmetic can be efficiently implemented. A receiver that can separate the data sequence and the channel information from each other can be implemented with an acceptable effort.

According to another preferred embodiment, a method for simultaneous reception of a data sequence and channel information for link adaptation from a radio channel of a wireless network is provided, the method comprising receiving a codeword from the radio channel, decoding said data sequence from the codeword using a channel decoder, and extracting the channel information from the codeword using said channel decoder, the codeword comprising both the data sequence and the channel information.

This method allows for decoding a codeword generated using a single channel encoder according the above-mentioned methods for simultaneous transmission of a data sequence and channel information. In particular, the method allows for separating the data sequence and the channel information from each other.

Preferably, the codeword consists of code bits depending either on the data sequence or on both the data sequence and the channel information. When encoding the data sequence, redundant information is added to the data sequence. The channel information may be included into the codeword without adding further redundancy to the code. This redundant information may be exploited to decode the channel information, although the codeword does not comprise code bits dedicated for representing the channel information.

In an embodiment, decoding the data sequence and extracting the channel information is carried out by systematically decoding, preferably convolutionally decoding, the codeword.

In order to regenerate the bits of the channel information, in an embodiment the method comprises inserting at least one bit into the codeword by depuncturing the codeword, a position of said bit within the depunctured codeword corresponding to a position of a bit of the channel information within the depunctured codeword, said depuncturing being performed before said convolutional decoding.

Alternatively to depuncturing, in another embodiment said decoding comprises determining the data sequence and the channel information depending on the codeword comprising a first intermediate codeword generated using a first code depending on the data sequence and a second intermediate codeword generated using a second code depending on the channel information, each codeword of the second code being different from any codeword of the first code. In an embodiment, the codeword to be decoded has been generated by adding the first intermediate codeword and the second intermediate codeword according to modulo-2-arithmetic.

According to yet another embodiment, a transmitter element for simultaneous transmission of a data sequence and channel information for link adaptation over a radio channel of a wireless network is provided, the transmitter element comprising a channel encoder being configured for encoding said data sequence to a codeword to be transmitted over the radio channel, wherein the channel encoder is configured for including the channel information into the codeword, the codeword comprising both the data sequence and the channel information. Preferably, the channel information is included into the codeword without adding further redundancy to a code used by the channel encoder. For instance, the codeword may comprise redundant information that is generated when encoding the data sequence. In an embodiment, this redundant information comprises the channel information. Therefore, the redundant information not only allows for error detection and/or correction of the data sequence but also renders possible that a decoder can decode the channel information. For example, an existing code used for encoding the data sequence only may be extended for encoding both the data sequence and the channel information without adding further bits to the codeword.

Preferably, the transmitter element is configured for executing one of the above-described methods for simultaneous transmission of a data sequence and channel information for link adaptation.

According to still another preferred embodiment, a receiver element for simultaneous reception of a data sequence and channel information for link adaptation from a radio channel of a wireless network is provided, the receiver element comprising a channel decoder configured for decoding said data sequence from a codeword received from the radio channel, wherein the channel decoder is configured for extracting the channel information from the codeword, the codeword comprising both the data sequence and the channel information.

Preferably, the receiver element is configured for executing one of the above-described methods for simultaneous reception of a data sequence and channel information for link adaptation.

The transmitter element and the receiver element are related to each other. They can be combined in order to build a transmission line for transmitting the data sequence and the channel information. According to an embodiment, a terminal of a wireless network comprising the transmitter element is provided. According to another embodiment, a base station of a wireless network comprising the receiver element is provided.

### Brief description of the Figures

Preferred embodiments and further advantages of the present invention are shown in the Figures and described in detail hereinafter.
- Figure 1: shows a wireless communication network comprising a base station and a terminal;
- Figure 2: shows a first embodiment of transmission line for transmission of a data sequence and channel information from the terminal to the base station; and
- Figure 3: shows a second embodiment of a transmission line for transmitting the data sequence and the channel information.

### Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

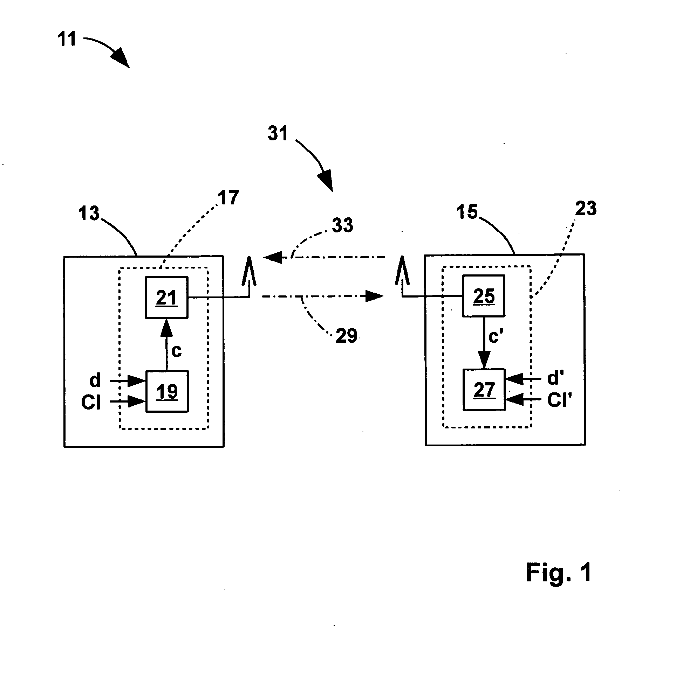

Figure 1 shows a wireless communication network 11 comprising a terminal 13 and a base station 15. In the shown embodiment, the network 11 is a LTE or LTE-Advanced communication system. In LTE or LTE-Advanced, the terminal is also referred to as User Equipment (UE) and the base station is also referred to as enhanced NodeB (eNodeB). However, the present invention is not limited to LTE or LTE-Advanced. In another embodiment, the network 11 is an access network of UMTS or WiMAX.

The terminal 13 comprises a first transceiver 17 having a channel encoder 19 and a transmitter 21, an output of the channel encoder 19 being connected to an input of the transmitter 21 and an output of the transmitter 21 being coupled with an antenna of the terminal 13.

The base station has a second transceiver 23 comprising a receiver 25 and a channel decoder 27. The receiver 25 is coupled with an antenna of the base station 15 and an output of the receiver 25 is connected to an input of the channel decoder 27.

The first transceiver 17, an uplink radio channel 29, and the second transceiver 23 are part of an uplink transmission line 31. The second transceiver 23 has a transmitter for transmitting over a downlink radio channel 33 to a receiver of the first transceiver 17. For the sake of simplicity, both the transmitter of the second transceiver 23 and the receiver of the first transceiver 17 are not shown.

When operating the network 11, a data sequence d that may comprise payload data passed to the transceiver 17 e.g. by higher protocol layers used within the network 11 and channel information CI are transmitted simultaneously from the terminal 13 over the transmission line 31 to the base station 15. To this end, the single channel encoder 19 is used to encode both the data sequence d and the channel information CI into a codeword c. The transmitter 21 transmits the codeword c over the uplink radio channel 29. The receiver 25 receives the code word c and passes it to the channel decoder 27. The channel decoder 27 decodes the received codeword c and regenerates the data sequence d and the channel information CI.

In LTE, the channel information CI is also referred to as Channel State Information (CSI). The channel information may comprise a Precoding Matrix Indicator (PMI), which may have a size of 2 bits and/or Channel Quality Information (CQI), which may have a size of 5 bits. The codeword c may have a size of about 1000 to 2000 bits. In LTE, the codeword is transmitted over a radio frame comprising fourteen Orthogonal Frequency-Division Multiplexing (OFDM) symbols in case of the short cyclic prefix (12 symbols with long cyclic prefix). Typically, the transmission of the whole codeword takes one millisecond. When using WiMAX, the codeword may be transmitted within a frame that has a duration of 20 milliseconds. The channel information CI may be used by the base station 15 for link adaptation of transmissions over the downlink radio channel 33. The terminal 13 determines the channel information CI depending on a measured channel quality of the downlink radio channel 33 and communicates the channel information CI to the base station 15. Then the base station 15 may adapt the downlink transmission e.g. by selecting a precoding matrix according to the PMI received from the terminal 13 and/or selecting a modulation and/or coding scheme depending on the CQI received from the terminal 13. Transmitting channel information is particularly effective in systems where characteristics of the uplink radio channel 29 and the downlink radio channel 33 differ from each other, such as systems using Frequency Division Multiplexing (FDD). However, the present invention is not limited FDD systems; it can also be used in connection with systems using Time Division Duplexing (TDD).

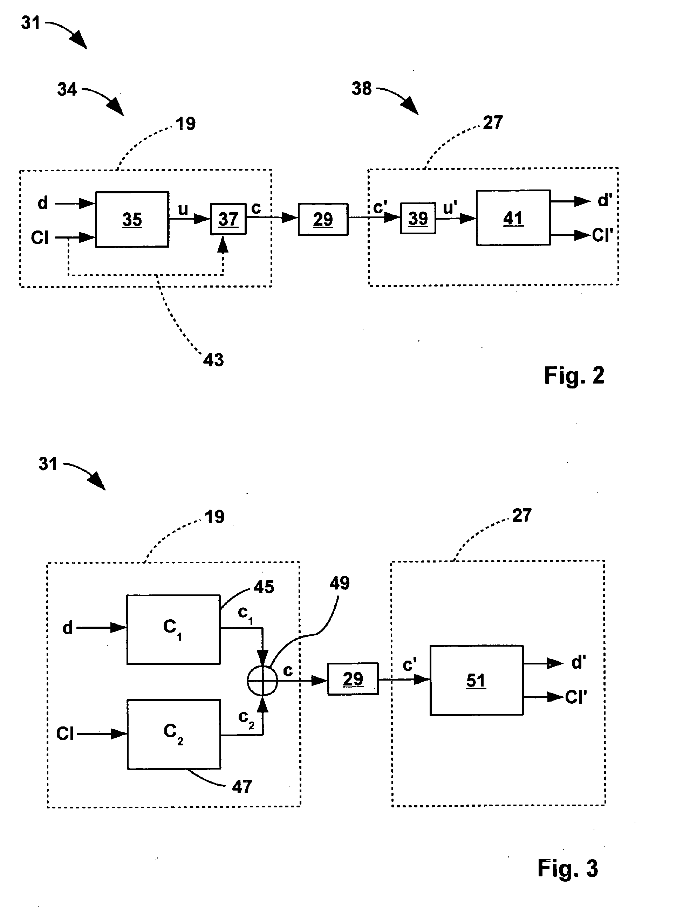

Figure 2 shows a schematic diagram of the transmission line 31 according to a first preferred embodiment. The channel encoder 19 is a part of a transmitter element 34 of the transmission line 31. The channel encoder 19 comprises a convolutional encoder 35, an output of which is connected to an input of a puncturing element 37.

The channel decoder 27, being part of a receiver element 38 of the transmission line 31, comprises a depuncturing element 39 and a convolutional decoder 41. The uplink radio channel 29 is arranged between the puncturing element 37 and the depuncturing element 39. The transmitter 21 and the receiver 25 are not shown. In an embodiment, the transmitter 21 is a part of the transmitter element 34; in another embodiment, the transmitter element 34 does not comprise the transmitter 21. In an embodiment, the receiver 25 is a part of the receiver element 38; in another embodiment, the receiver element 38 does not comprise the receiver 25.

When operating the transmission line 31, the convolutional encoder 35 generates an unpunctured codeword u by systematically encoding both the data sequence d and the channel information CI. Systematic encoding leads to an unpunctured codeword u that comprises exact copies of each bit of the input data d, CI. Therefore, it is known which bits of the unpunctured codeword u correspond to the bits of the channel information CI. A puncturing rule (arrow 43) of the puncturing element 37 is designed such that the puncturing element 37 removes all bits of the channel information CI from the unpunctured codeword u. In other words, puncturing indices identifying positions of bits of the unpunctured codeword u to be punctured correspond to the position of the bits of the channel information CI within the unpunctured codeword u.

After puncturing by the puncturing element 37 and transmitting over the uplink radio channel 29, the codeword c is regenerated at the receiver side of the transmission line 31. Due to transmission arrows, a regenerated codeword c' may be different from the transmitted codeword c. The depuncturing element 39 reinserts bits into the codeword c' by using the same puncturing rule 43, i.e., the same puncturing indices as the puncturing element 37. The inserted bits may have a predefined binary value, e.g. the value zero or one. A regenerated unpunctured codeword u' generated by the depuncturing element 39 is then decoded by the convolutional decoder 41. The convolutional decoder determines the channel information CI by exploiting the redundancy of the convolutional code used to generate the codeword c. Thus, the convolutional decoder 41 can generate an estimated regenerated data sequence d' and an estimated regenerated channel information CI' although the bits of the channel information CI have not been transmitted explicitly over the uplink radio channel 29.

In another embodiment, a different type of punctured code is used, such as a turbo code or a Low-Density Parity-Check (LDPC) code, instead of the convolutional code.

Figure 3 shows a schematic diagram of a second preferred embodiment of the transmission line 31. The channel encoder 19 comprises a first encoder 45 for encoding the data sequence d and a second encoder 47 for encoding the channel information CI. Outputs of the first encoder 45 and the second encoder 47 are connected to corresponding inputs of a combiner 49. The channel decoder 27 comprises a decoder element 51 for determining the estimated regenerated data sequence d' and the estimated regenerated channel information CI' depending on the received codeword c'.

When operating the transmission line 31, the first encoder 45 generates a first intermediate codeword c₁ depending on the data sequence d. The second encoder 47 generates a second intermediate codeword c₂ depending on the channel information CI. The combiner 49 generates the codeword c by combining the intermediate codewords c₁, c₂. In the shown embodiment, the combiner 49 performs a modulo-2-addition of the two intermediate codewords c₁ and c₂. At the receiver side, the codeword c transmitted over the uplink radio channel 29 is regenerated as the codeword c'. The decoder element 51 determines the regenerated estimated data sequence d' and the regenerated estimated channel information CI'.

In the embodiment shown in Figure 3, the first encoder 45 uses a first channel code C₁ for generating the first intermediate codeword c₁. The second encoder 47 uses a second channel code C₂ for generating the second intermediate codeword c₂. The first code C₁ = (n₁, k₁) being a redundant code preferably an error detecting or correcting code, a code rate of the first code c₁ is r₁ = k₁/n₁, where k₁ is the number of the data bits of the data sequence d, i.e. the length of the data sequence d, and n1 is the length of the first intermediate codeword c₁. The valid first intermediate codewords c₁ are spanned over a 2^{k1} space. In case of a linear code, the modulo-2-addition of two valid codewords of the first channel code C₁ would yield another valid codeword of this code C₁. In order to allow for separating the channel information CI from the data sequence at the receiver side, i.e. by the decoder element 51, the second channel code C₂ differs from the first channel code C₁.

In the shown embodiment, the second channel code C₂ is designed such that the second codeword c₂ does not belong to the 2^{*k*1} space of the first intermediate codeword c₁. The second channel code C₂ = (n₂, k₂) has the second intermediate codeword c₂ spanned over a 2^{k2} space. The channel codes C₁ and C₂ are designed such that each valid codeword c₂ of the second channel code C₂ corresponds to one of 2^{*n*1} ― 2^{*k*2} invalid first intermediate codewords C₁. These invalid codewords do not belong to the first code C₁. In the shown embodiment, all codewords c₁, c₂, c have the same length n₁ = n₂ = n. Thus, the first code c₁ must be redundant enough to allow for inserting the channel information CI by combining the first intermediate codeword c₁ with the second intermediate codeword c₂, i.e. the condition 2^{*k*2} > 2^{*n*1} ― 2^{*k*1} must be met.

The space of the second codewords c₂ and the space of the first codewords c₁ being disjunctive, the second code C₂ can be considered to act in the "outer space" of the first channel code C₁.

In order to determine the estimated data sequence d' and the estimated channel information CI', the decoder element 51 may comprise a maximum likelihood detector arranged for comparing all possible codeword hypotheses of the two codes C₁ and C₂.

Preferably, the second channel code C₂ is designed such that the performance of the first channel code C₁ regarding error detection or error correction is degraded to a small extend only. To this end, possible codewords in the outer space, i.e. codewords that do not belong to the first code C₁, maybe searched. Then the number of possible codewords required to encode the channel information CI is selected such that the hamming distance or free distance of the resulting code is maximized.

To sum-up, both embodiments described herein allow for transmitting the channel information along the data sequence without consuming additional transmission resources by encoding both the data sequence d and the channel information CI by means of a single channel encoder 19. The channel information CI is communicated over a transmission line 31 by exploiting the redundancy of the channel code used for encoding the data sequence d. Link adaptation schemes that require frequent transmission of channel information CI such as closed-loop adaptation schemes like Multiple-Input Multiple-Output (MIMO), precoding Cooperative Multi-Point transmission (COMP), and MIMO-Orthogonal Frequency-Division Multiple Access (MIMO-OFDMA) can be implemented efficiently. Furthermore, scheduling transmissions of the channel information CI explicitly in the time domain or the frequency domain can be avoided, reducing both overhead and latency of channel information transmission.

The functions of the various elements shown in the Figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. Method for simultaneous transmission of a data sequence (d) and channel information (CI) for link adaptation over a radio channel (29) of a wireless network (11), the method comprising encoding said data sequence to a codeword (c) using a channel encoder (19) and transmitting (21) the codeword (c) over the radio channel (29), wherein the method further comprises including the channel information (CI) into the codeword (c) using said channel encoder (19), the codeword (c) comprising both the data sequence (d) and the channel information (CI).

2. Method according to claim 1, wherein the codeword (c) consists of code bits depending either on the data sequence (d) or on both the data sequence and the channel information (CI).

3. Method according to claim 1 or 2, wherein the channel encoder (19) comprises a systematic encoder, preferably a systematic convolutional encoder (35), and said encoding comprises generating the codeword (u) by a systematically encoding the data sequence (d) and the channel information (CI).

4. Method according to claim 3, wherein said encoding comprises puncturing (37) at least one bit of the generated codeword (u) that corresponds to a bit of the channel information (CI).

5. Method according to claim 1 or 2, wherein said encoding comprises generating a first intermediate codeword (c₁) depending on the data sequence (d) using a first code (C₁) and generating a second intermediate codeword (c₂) depending on the channel information (CI) using a second code (C₂), each codeword (c₂) of the second code (C₂) being different from any codeword (c₁) of the first code (c₁).

6. Method according to claim 5, wherein said encoding comprises generating the codeword (c) by adding (49) the first intermediate codeword (c₁) and the second intermediate codeword (c₂) according to modulo-2-arithmetic.

7. Method for simultaneous reception of a data sequence (d) and channel information (CI) for link adaptation from a radio channel (29) of a wireless network (11), the method comprising receiving (25)a codeword (c) from the radio channel (29) and decoding said data sequence (d) from the codeword (c) using a channel decoder (27), wherein the method further comprises extracting the channel information (CI) from the codeword (c) using said channel decoder (29), the codeword (c) comprising both the data sequence (d) and the channel information (CI).

8. Method according to claim 7, wherein the codeword (c) consists of code bits depending either on the data sequence (d) or on both the data sequence (d) and the channel information (CI).

9. Method according to claim 7 or 8, wherein decoding the data sequence and extracting the channel information is carried out by systematically decoding, preferably systematically convolutionally decoding (41), the codeword (c).

10. Method according to claim 9, wherein the method comprises inserting at least one bit into the codeword (c') by depuncturing (39) the codeword (c'), a position of said bit within the depunctured codeword (u') corresponding to a position of a bit of the channel information (CI) within the depunctured codeword (u'), said depucturing (39) being performed before said convolutional decoding (41).

11. Method according to claim 7 or 8, wherein said decoding comprises determining the data sequence (d) and the channel information (CI) depending on the codeword (c') comprising a first intermediate codeword (c₁) generated using a first code (C₁) depending on the data sequence (d) and a second intermediate codeword (c₂) generated using a second code (C₂) depending on the channel information (CI), each codeword (c₂) of the second code (C₂) being different from any codeword (c₁) of the first code (C₁).

12. Transmitter element (34) for simultaneous transmission of a data sequence (d) and channel information (CI) for link adaptation over a radio channel (29) of a wireless network (11), the transmitter element (34) comprising a channel encoder (19) being configured for encoding said data sequence (d) to a codeword (c) to be transmitted over the radio channel (29), wherein the channel encoder (19) is configured for including the channel information (CI) into the codeword (c), the codeword (c) comprising both the data sequence (d) and the channel information (CI).

13. Transmitter element (34) according to claim 12,
wherein the transmitter element (34) is configured for executing a method according to one of claims 1 to 6.

14. Receiver element (38) for simultaneous reception of a data sequence (d) and channel information (CI) for link adaptation from a radio channel (29) of a wireless network (11), the receiver element (38) comprising a channel decoder (27) configured for decoding said data sequence (d) from a codeword (c') received from the radio channel (29), wherein the channel decoder (27) is configured for extracting the channel information (CI) from the codeword (c), the codeword (c) comprising both the data sequence (d) and the channel information (CI).

15. Receiver element (38) according to claim 14, wherein the receiver element (38) is configured for executing a method according to one of claims 7 to 11.
